(19) **Europäisches Patentamt**

**European Patent Office**

**Office européen des brevets**

(11) **EP 1 408 635 B1**

(12) **EUROPEAN PATENT SPECIFICATION**

(45) Date of publication and mention
of the grant of the patent:
**29.03.2006 Bulletin 2006/13**

(51) Int Cl.:
***H04B 17/00*** *(2006.01)*   ***H04B 7/005*** *(2006.01)*
***H04B 1/707*** *(2006.01)*

(21) Application number: **02022734.4**

(22) Date of filing: **11.10.2002**

(54) **Method and device for estimating a Signal to Interference Ratio (SIR) in WCDMA systems**

Verfahren und Vorrichtung zur Schätzung vom Signal-Interferenz-Verhältnis (SIR) für WCDMA Systeme

Procédé et dispositif d'estimation du rapport signal-interférence (SIR) pour les systèmes WCDMA

(84) Designated Contracting States:
**AT BE BG CH CY CZ DE DK EE ES FI FR GB GR
IE IT LI LU MC NL PT SE SK TR**

(43) Date of publication of application:
**14.04.2004 Bulletin 2004/16**

(73) Proprietor: **TELEFONAKTIEBOLAGET LM
ERICSSON (publ)
164 83 Stockholm (SE)**

(72) Inventor: **Jonsson, Elias
211 29 Malmö (SE)**

(74) Representative: **Karlsson, Leif Gunnar Börje
Ström & Gulliksson AB
P.O. Box 4188
203 13 Malmö (SE)**

(56) References cited:
**EP-A- 0 969 604        WO-A-02/41530**

**EP 1 408 635 B1**

**Description**

**Technical Field of the Invention**

The present invention relates generally to a method and device for estimating the signal-to-interference ratio (SIR) of signals transmitted in wireless communication networks through an air interface. More particularly, the invention relates to a method and device for signal to interference estimation in WCDMA (Wideband Code Division Multiple Access) Radio Access Networks. Even more particularly, the invention relates to a robust and precise SIR estimation under conditions with noise disturbed transmission channels and unknown contents of the transmitted data.

**Background of the Invention**

Power control is important for capacity and efficiency in mobile WCDMA systems. For example, if a mobile transmitter/receiver unit, such as a mobile radio terminal, is located close to a base station transmitter/receiver, the power level of signals, which are wireless transmitted over an air interface to the mobile unit from the base station, in absence of adjustment, would be comparatively high. This could interfere with transmissions to other mobile units located farther away from the base station. Conversely, the signal power of transmissions from a mobile unit, which was located far from the base station, could be comparatively weak. Accordingly, it has become common practice to provide a transmission power control in such wireless communication systems.

Currently, power control is accomplished by estimating the signal to interference ratio (SIR) of received signals. If the SIR of a signal received at a mobile unit is lower than a threshold value, a command or adjustment signal is sent to the transmitting base station to increase transmission power. The command is sent on the reverse link of the communication system, which could either be the uplink or the downlink, depending on which link is controlled. If the estimated SIR is higher than the threshold value, a command to decrease transmission power is sent, or vice versa.

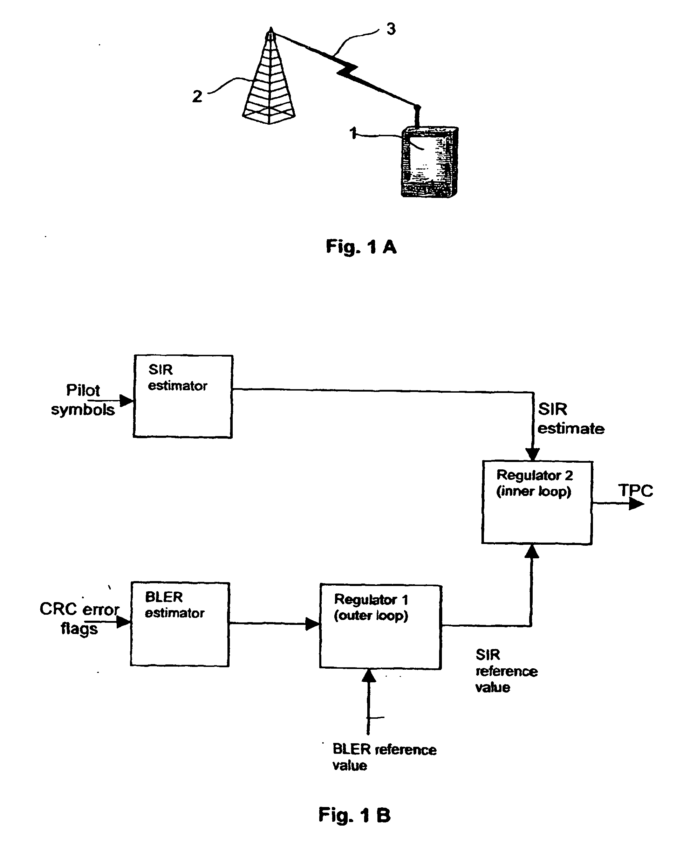

More specifically, as is well known to those skilled in the art, the signal to interference ratio is a crucial quantity in the inner loop power control. In a typical power control system, see Figure 1B, the outer loop sets the reference target SIR and the inner loop adjusts the transmitted power such that the estimated SIR agrees with the reference or target SIR. The inner loop controls the communication between a base station and a mobile user equipment and vice versa. This is achieved by giving power up or power down commands, that is, TPC (Transmit Power Control, as mentioned above) equals one or zero respectively. To each transport block there is a cyclic redundancy check (CRC). If the decoded CRC is determined to be correct, the CRC error flag (CRCef) is set to zero, otherwise to one. Filtering or averaging the CRCef in another appropriate way obtains an estimate of the block error rate (BLER). Usually the outer loop consists of an appropriate regulator that adjusts the reference SIR value depending on the discrepancy between the reference BLER and the estimated BLER. The purpose of the power control is to keep the estimated BLER as close as possible to the reference BLER.

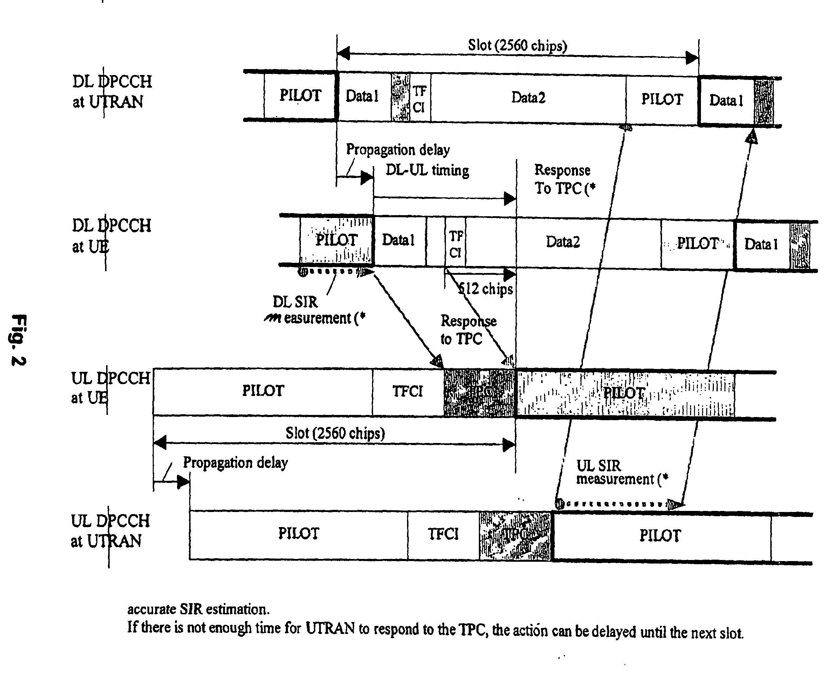

The inner loop runs usually at such a frequency that a new SIR estimate is produced every slot. In the 3GPP specification it is suggested that the pilot symbols be used for the SIR estimation. The user equipment (UE), such as a mobile radio terminal, is required to produce a TPC command within 512 chips beginning from the first arrived propagation channel path, see Figure 2. The relative power difference between the data symbols and the pilot symbols is known. The transmitted power change is always done at the beginning of the pilot field. However, using only the pilots in estimating the SIR produces very noisy estimates, which in turn produces a large variance on the transmitted powers.

It is not desired to have such a variance of transmitted powers as both the UE and the base-station benefit from a low variance in the transmitted power. With a low variance of transmitted powers, e.g. a lower average transmitted power can be achieved and thus additional capacity in the base-station and less power consumption at the UE is achieved.

US 6 070 086 discloses the use of the data bits as well as the pilots for estimating the SIR. The data bits are added coherently, whereby the sent bits have to be known. In US 6 070 086 hard decisions are made on the data bits. This implies that few mistakes in decoding the sent data bits are made, if the channel quality is good. Thus they can consequently be useful in estimating a more precise SIR. However, the contrary is true if the channel is of poor quality due to e.g. noise or other disturbances. WO 0241530 discloses that in a portable terminal, the receiving quality thereof is determined based on the signal received from a base station to generate a receiving quality message indicating the receiving quality and to generate power control information to request transmission power adjustment of the base station based on the signal received from the base station. In addition, the receiving quality message is inserted into the transmission signal to the base station to be transmitted at the frame rate and the power control information is inserted into the transmission signal to be transmitted at the rate of slots constituting the frame. The base station estimates the current receiving quality in the portable terminal based on both the receiving quality message and the power control information for performing the adaptive modulation and coding based on the esimated value.

Furthermore, in the above mentioned state-of-the-art method, the power estimates of the pilot and data symbols are given equal weights and the sent TPC command is always assumed to be received correctly. In practice this is not always the case, thus resulting in inaccurate SIR estimation. It is believed that power is changed in one direction, i.e. up or down depending on the TPC data, but in reality it is changed in the other direction, because the received TPC data has been modified by transmission errors. This results in an inaccurate SIR estimation and causes also high variance of the transmitted power, as mentioned above.

Therefore, a need exists for a robust and precise SIR estimate under conditions with noise disturbed transmission channels and unknown contents of the transmitted data.

**Summary of the Invention**

The present invention overcomes the above-identified deficiencies in the art by providing a robust and precise SIR estimate according to the appended independent claims.

The SIR estimation is performed for a signal transmitted from a first unit and to a remotely located second unit in a Wideband Code Division Multiple Access WCDMA wireless communication system, whereby the signal is transmitted through an air interface. A Transmit Power Control TPC command verification is performed. The verification comprises determining if the TPC command has been correctly received. The SIR estimation depends on the result of the TPC verification.

According to an aspect of the invention, a method is provided, comprising the steps of verifying a transmitted Transmit Power Control TPC command, wherein said verifying comprises determining if said TPC command has been correctly received, and giving a SIR estimation depending on the result of said TPC verification.

According to another aspect of the invention, a device is provided, comprising a means for Transmit Power Control TPC verification having an output signal, wherein said TPC verification means comprises means for determining if a TPC command has been correctly received, a means for SIR estimation using said output signal as an input signal.

According to yet another aspect of the invention, a computer readable medium is provided, having a plurality of computer-executable instructions adaptd to carry out the method according to the invention.

The SIR estimate according to the invention is operable under conditions with noise disturbed transmission channels and unknown contents of the transmitted data. The SIR estimation according to the invention is more accurate and robust than those of the prior art.

Averaging is performed only over one symbol and the need of making hard decisions on the symbols is eliminated, thus resulting in a simpler power estimator. However, averaging can also be performed over more than one symbol.

**Brief Description of the Drawings**

Preferred embodiments of the present invention will be described in the following detailed disclosure, reference being made to the accompanying drawings, in which

FIG 1A shows a block diagram illustrating a wireless communication system employing embodiments of the invention,
FIG 1B is an overview of the power control in WCDMA for a dedicated physical channel,
FIG 2 shows a timing diagram of the transmit control power timing for WCDMA,
FIG 3 illustrates the partitioning of slots for the downlink at the UE,
FIG 4 illustrates the partitioning of slots for the up-link at UTRAN, whereby the control channel is the Dedicated Physical Control Channel (DPCCH) and the data channel is the Dedicated Physical Data Channel (DPDCH),
FIG 5 is a flow chart illustrating an embodiment of the method according to the invention, and
FIG 6 shows an embodiment of a device according to the invention.

**Detailed Description of Embodiments**

A more complete understanding of the method and device according to the invention will be derived from the following detailed description of embodiments of the invention in conjunction with the appended drawings and claims. For this purpose, some definitions of terms will be given.

In Fig. 3 $I_1^{(n)}$ denotes the pilot symbols at time $n$; $I_2^{(n)}$ denotes the data symbols in data field one and the TPC symbols; $I_3^{(n)}$ denotes the TFCI (Transport Format Combination Indicator) symbols and the data symbols in data field two. As illustrated in Fig. 3, the TPC command is to be computed at the end of interval $I_2^{(n)}$. For an easier understanding of the reasoning below, only the data symbols in $I_2^{(n)}$ and $I_3^{(n)}$ will be used for the downlink power estimation.

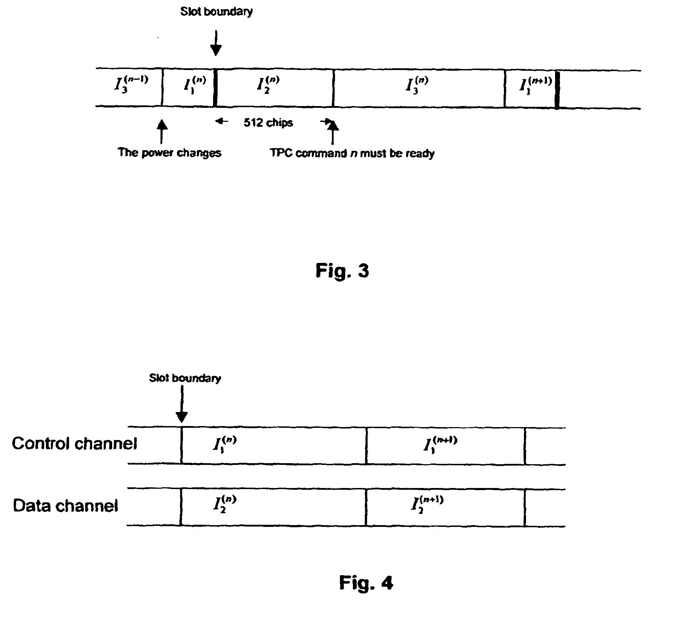

In Fig. 4, $I_1^{(n)}$ denotes the pilot symbols, TPC, TFCI, and FBI (Feedback Information) symbols, and $I_2^{(n)}$ denotes the data symbols. To simplify the analysis only the pilot symbols will be used in $I_1^{(n)}$.

$\Delta_{TPC}$ denotes the change of power in dB, which results from a TPC command, and $\Delta_{rel}$ is the relative power discrepancy between pilot and data symbols in dB. $\Delta_{rel}$ is usually known. Otherwise $\Delta_{rel}$ is found by filtering the quotient of the estimated power between pilot and data symbols.

Generally, x is a complex number, and x' is the conjugate and |x| is the absolute value. If x is a random variable, the expectation is denoted by $E(x)$.

The despread received symbol is given by $y_j$, whereby

$$y_j = h_j x_j + n_j \; .$$

Here, the propagation channel is modelled by $h_j$ for symbol j, the sent symbol is $x_j$, and thermal noise, quantization noise, as well as the intra/inter cellular interference noise is given by $n_j$ for symbol j. The complex symbol $x_j$ is scaled to have length one. The noise is assumed to be uncorrelated, zero mean, with variance $\sigma^2$. Only one multi-path delay is considered here. The reasoning for several multi-path delays is done in the same manner, applying the below reasoning for each delay. The reasoning below is also restricted to the down-link since it is the slightly more complicated case and is modified for the up-link case, if desired.

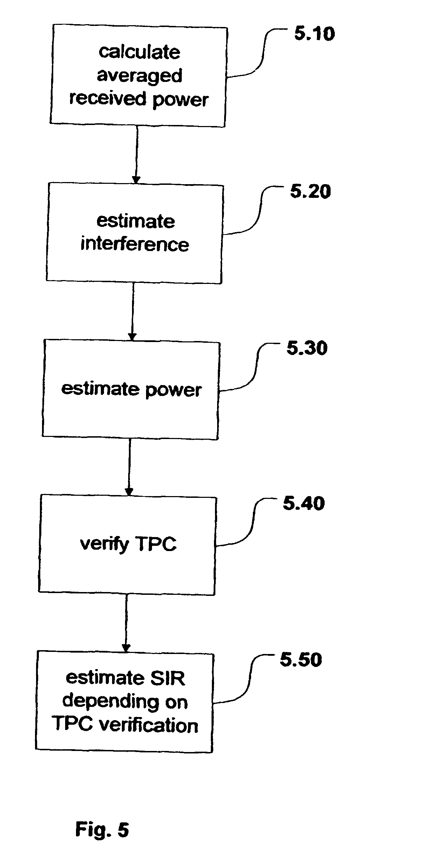

Fig. 5 shows an embodiment of the method according to the invention. In Fig. 5 the TPC verification and SIR estimation is performed as follows. $P_i^{(n)}$ is the average received power for the symbol or a subset of symbols in interval $I_i^{(n)}$. Denote the subset of symbols in $I_i^{(n)}$ as $y_{j_k}^{(n,i)}$, $k = 1,...,N_i$. Here, $N_i$ is the number of symbols used in interval $I_i^{(n)}$, and $j_A$ is enumerating the selected symbols, where k is the index for the subset. The average received power is calculated in 5.10 as

$$P_i^{(n)} = \frac{1}{N_i} \sum_{k=1}^{N_i} y_{j_k}^{(n,i)} \left( y_{j_k}^{(n,i)} \right)^*$$

and the expectation of $P_i^{(n)}$ is given by

$$E(P_i^{(n)}) = \frac{1}{N_i} \sum_{k=1}^{N_i} \left| h_{j_k} \right|^2 + \sigma^2 \; .$$

In this case it is assumed that we have no transmit diversity. Though, in the case of transmit diversity where the data symbols are encoded using space-time transmit diversity (STTD) and two transmit antennas are used, the same formula is valid, which will be shown below.

The interference is estimated from the pilot symbols in 5.20 as

$$N^{(n)} = \frac{1}{N_p - 1} \sum_{j=1}^{N_p} \left| y_j^{(n,1)} - \frac{1}{N_p} \sum_{k=1}^{N_p} y_k^{(n,1)} \left( x_j^{(n,1)} \right)^* \right|^2 \; .$$

Very often the interference is modelled as being a slow changing process. In this case it is possible to filter the variable $N^{(n)}$ to get a better estimate. Though, the remaining reasoning below holds whether filtered or unfiltered noise estimates are used.

The SIR is estimated at time n as

$$SIR_{est}^{(n)} = \frac{P^{(n)}}{N^{(n)}} - 1. \qquad\qquad (1)$$

Here, $P^{(n)}$ is the estimated power, given by

$$P^{(n)} = w_3 P_3^{(n-1)} \cdot 10^{0.1\Delta_{TPC}^{(n-1)}} + w_1 P_1^{(n)} \cdot 10^{0.1\Delta_{rel}} + w_2 P_2^{(n)} \qquad,$$

depicted as 5.30.

One is subtracted in equation (1) to account for the noise. Here $w_i \geq 0$, for $i = 1,...,3$ and it is

$$w_1 + w_2 + w_3 = 1$$

Preferably, the weights are selected, for example, in relation to the contributed energy. That is,

$$w_1 = \frac{N_1}{N_1 + 10^{-0.1\Delta_{rel}} N_2 + 10^{-0.1\Delta_{rel}} N_3} \qquad,$$

$$w_2 = \frac{10^{-0.1\Delta_{rel}} N_2}{N_1 + 10^{-0.1\Delta_{rel}} N_2 + 10^{-0.1\Delta_{rel}} N_3}$$

and

$$w_3 = \frac{10^{-0.1\Delta_{rel}} N_3}{N_1 + 10^{-0.1\Delta_{rel}} N_2 + 10^{-0.1\Delta_{rel}} N_3} \qquad.$$

It is assumed that the TPC command at time $n$ -1 has been received correctly at the base-station. The SIR estimator given by equation (1) is extended to use older information, i.e. information from slots being transmitted at times before n-1, if desired, by assuming that all TPC commands are received correctly. However, this is limited because the propagation channel changes due to fading. If knowledge about the rate of change of the propagation channel is available, a SIR estimator is used that controls the amount of old information depending on the rate of change of the propagation channel.

TPC is verified in 5.40 as follows.

It is $\Delta_{TPC}^{(n-1)} = \pm\Delta_{TPC}$ dB, depending on if we have a power up (+) or power down (-) command. Take

$$\hat{P}_{est}^{(n)} = \hat{w}_1 P_1^{(n)} \cdot 10^{0.1\Delta_{rel}} + \hat{w}_2 P_2^{(n)} \qquad\qquad (2)$$

, which only uses pilot and data symbols after the transmitted power change. Then, it is

$$\overline{P}_{est}^{(n-1)} = \overline{w}_1 P_1^{(n-1)} \cdot 10^{0.1\Delta_{pd}} + \overline{w}_2 P_2^{(n-1)} + \overline{w}_3 P_3^{(n-1)} \qquad (3)$$

, which is the power in the previous slot counted from where the pilot begins.

The weights in equation (2) and (3) obey the same conditions as the weights in equation (1), as mentioned above.

If a power up command is sent to the base station, the command has been correctly received, if

$$\left| \overline{P}_{est}^{(n-1)} \cdot 10^{0.1\Delta_{TPC}} - \hat{P}_{est}^{(n)} \right| < c \left| \overline{P}_{est}^{(n-1)} \cdot 10^{-0.1\Delta_{TPC}} - \hat{P}^{(n)} \right| \qquad (4) \qquad .$$

Here, $c$ is a constant. If $c=1$ it means that the difference in distance from the previous estimated power at time $n$-1 is compared, $\overline{P}_{est}^{(n-1)} \cdot 10^{\pm 0.1\Delta_{TPC}}$, given a power up or down command, to the estimated power in slot $n$, $\hat{P}_{est}^{(n)}$.

If $c$ is set to c > 1, then a bias towards picking the sent TPC command is introduced. This is used when the power estimates are corrupted by a lot of noise.

In 5.50, SIR is estimated as follows, depending on the result of the TPC verification from 5.40. If equation (4) is true, i.e. the power command has been received correctly, the estimated SIR at time n is according to one embodiment of the invention:

$$SIR_{est}^{(n)} = \frac{w_3 P_3^{(n-1)} \cdot 10^{0.1\Delta_{TPC}} + w_1 P_1^{(n)} \cdot 10^{0.1\Delta_{pd}} + w_2 P_2^{(n)}}{N^{(n)}}, \qquad (5)$$

on the other hand, if equation (4) is false, i.e. the power command has not been received correctly, the estimated SIR at time n is according to another embodiment of the invention:

$$SIR_{est}^{(n)} \approx \frac{w_3 P_3^{(n-1)} \cdot 10^{-0.1\Delta_{TPC}} + w_1 P_1^{(n)} \cdot 10^{0.1\Delta_{pd}} + w_2 P_2^{(n)}}{N^{(n)}} - 1 \qquad (6)$$

Similarly, in another embodiment of the invention, if the sent command is a down command it is checked, if

$$\left| \overline{P}_{est}^{(n-1)} \cdot 10^{-0.1\Delta_{TPC}} - \hat{P}_{est}^{(n)} \right| < c \left| \overline{P}^{(n-1)} \cdot 10^{0.1\Delta_{TPC}} - \hat{P}_{est}^{(n)} \right|$$

is fulfilled.

This concludes the TPC verification and the SIR is estimated using equation (5) or (6). It is possible to include more prior information into $\overline{P}_{est}^{(n-1)}$ in equation (4) if so needed. However, as mentioned above, caution should be taken if the propagation channel changes rapidly.

In a further embodiment of the invention, the data symbols are STTD (space-time transmit diversity) encoded. In this case the power is computed by taking the absolute value of the symbols. However, the symbols must be summed-up pair-wise as will become clear from the following reasoning.

When the data symbols are STTD encoded, two consecutive received symbols are described by

$$y_j = h^{(1)}x_j - h^{(2)}x_{j+1}^*,$$

and

$$y_{j+1} = h^{(1)}x_{j+1} + h^{(2)}x_j^*.$$

Where $h^{(1)}$ and $h^{(2)}$ denotes the true propagation channel estimates for antenna one and two. It is

$$|y_j|^2 = |h^{(1)}|^2 + |h^{(2)}|^2 - (h^{(1)})^* h^{(2)}x_j^* x_{j+1}^* - h^{(1)}(h^{(2)})^* x_j x_{j+1}$$

and

$$|y_{j+1}|^2 = |h^{(1)}|^2 + |h^{(2)}|^2 + (h^{(1)})^* h^{(2)}x_j^* x_{j+1}^* + h^{(1)}(h^{(2)})^* x_j x_{j+1}.$$

Adding the squared symbols results in

$$|y_j|^2 + |y_{j+1}|^2 = 2(|h^{(1)}|^2 + |h^{(2)}|^2),$$

which coincides with the case of no transmit diversity.

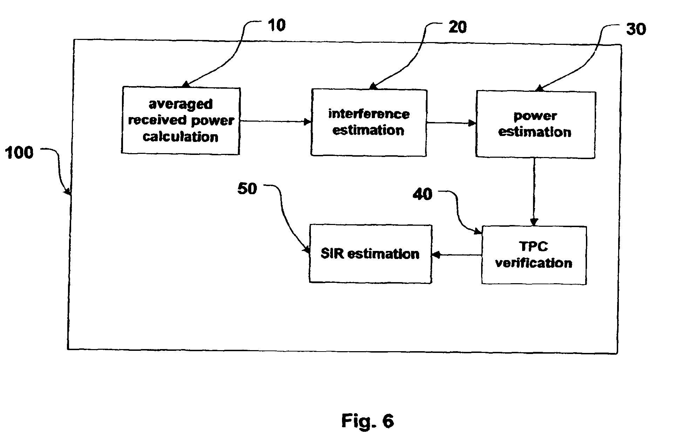

Fig. 6 shows an embodiment of a device 100 of the invention. Device 100 comprises means 10 for calculating the averaged received power, means 20 for estimating the interference, means 30 for estimating the power, means 40 for TPC verification and means 50 for SIR estimation depending on the output of means 40.

In a further embodiment of the invention, respective signals 3 are transmitted from a base station 2 and received at a mobile unit 1.

In yet another embodiment of the invention, respective signals 3 are transmitted from a mobile unit 1 and received at a base station 2.

It is thus to be emphasised that the principle of the invention is applicable to both the downlink and the uplink case.

Furthermore, it should be emphasised that the term "comprises/comprising" when used in this specification is taken to specify the presence of stated features, integers, steps or components but does not preclude the presence or addition of one or more other features, integers, steps, components or groups thereof.

The present invention has been described above with reference to specific embodiments. However, other embodiments than the preferred above are equally possible within the scope of the appended claims.

**Claims**

1. A method for estimating a signal to interference ratio SIR of a signal transmitted from a first unit to a remotely located second unit in a Wideband Code Division Multiple Access WCDMA wireless communication system, said signal being transmitted through an air interface and comprising pilot and data symbols, **characterised by** the steps of:

   verifying (5.40) a transmitted Transmit Power Control TPC command, wherein said verifying comprises weighting said pilot and data symbols, and
   determining if said TPC command has been correctly received, and
   giving a SIR estimation (5.50) depending on the result of said TPC verification (5.40).

2. A method according to claim 1, **characterised by** encoding said data symbols using space-time transmit diversity STTD.

3. A method according to claim 1, **characterised by** estimating interference from said pilot symbols (5.20).

4. A method according to claim 3, **characterised by** filtering the estimated interference.

5. A method according to claim 1, wherein the first unit is a base station and the second unit is a mobile unit.

6. A method according to claim 1, wherein the first unit is a mobile unit and the second unit is a base station.

7. A device (100) for estimating a signal to interference ratio SIR of a signal transmitted from a first unit to a remotely located second unit in a Wideband Code Division Multiple Access WCDMA wireless communication system, said signal being transmitted through an air interface and comprising pilot and data symbols, **characterised in that** said device comprises:

   a means for Transmit Power Control TPC verification (40) having an output signal, wherein said TPC verification means is arranged to weight said pilot and data symbols and comprises means for determining if a TPC command has been correctly received, and
   a means for SIR estimation (50) using said output signal as an input signal.

8. A device (100) according to claim 7, wherein said data symbols are encoded using space-time transmit diversity STTD.

9. A device (100) according to claim 7, **characterised by** a means for estimating interference from said pilot symbols.

10. A device (100) according to claim 9, **characterised by** a filter for filtering said estimated interference.

11. A device (100) according to claim 7, wherein the device is adapted to estimate a signal to interference ratio SIR of a signal transmitted from a base station to a remotely located mobile unit.

12. A device (100) according to claim 7, wherein the device is adapted to estimate a signal to interference ratio SIR of a signal transmitted from a mobile unit to a remotely located base station.

13. A computer readable medium having a plurality of computer-executable instructions adapted to carry out the method according to any of claims 1 to 6.


**Patentansprüche**

1. Ein Verfahren zum Schätzen eines Signal-Interferenz-Verhältnisses SIR eines Signals, das von einer ersten Einheit zu einer entfernt befindlichen zweiten Einheit in einem drahtlosen Kommunikationssystem mit Breitband-Vielfachzugriff im Codemultiplex (Wideband Code Division Multiple Access) WCDMA übertragen wird, wobei das Signal durch eine Luftschnittstelle übertragen wird und Pilot- und Datensymbole umfasst, **gekennzeichnet durch** die Schritte:

   Verifizieren (5.40) eines übertragenen Übertragungsleistungssteuer- (Transmit Power Control) TPC-Befehls, wobei das Verifizieren umfasst
   Gewichten der Pilot- und Datensymbole, und
   Bestimmen, ob der TPC-Befehl korrekt empfangen wurde, und
   Geben einer SIR-Schätzung (5.50) abhängig von dem Ergebnis der TPC-Verifizierung (5.40).

2. Ein Verfahren nach Anspruch 1, **gekennzeichnet durch** Kodieren der Datensymbole unter Verwendung von Raum-Zeit-Übertragungsdiversifizierung (STTD, space-time transmit diversity).

3. Ein Verfahren nach Anspruch 1, **gekennzeichnet durch** Schätzung von Interferenz von den Pilotsymbolen (5.20).

4. Ein Verfahren nach Anspruch 3, **gekennzeichnet durch** Filtern der geschätzten Interferenz.

**5.** Ein Verfahren nach Anspruch 1, wobei die erste Einheit eine Basisstation ist und die zweite Einheit eine Mobileinheit ist.

**6.** Ein Verfahren nach Anspruch 1, wobei die erste Einheit eine Mobileinheit ist und die zweite Einheit eine Basisstation ist.

**7.** Eine Einrichtung (100) zum Schätzen eines Signal-Interferenz-Verhältnisses SIR eines Signals, das von einer ersten Einheit zu einer entfernt befindlichen zweiten Einheit in einem drahtlosen Kommunikationssystem mit Breitband-Vielfachzugriff im Codemultiplex WCDMA übertragen wird, wobei das Signal durch eine Luftschnittstelle übertragen wird und Pilot- und Datensymbole umfasst, **gekennzeichnet dadurch, dass** die Einrichtung umfasst:

ein Mittel für Übertragungsleistungssteuer-TPC-Verifizierung (40) mit einem Ausgangssignal, wobei das TPC-Verifizierungsmittel angeordnet ist, die Pilot- und Datensymbole zu gewichten und Mittel umfasst zum Bestimmen, ob ein TPC-Befehl korrekt empfangen wurde, und
ein Mittel für SIR-Schätzung (50), das das Ausgangssignal als ein Eingangssignal verwendet.

**8.** Eine Einrichtung (100) nach Anspruch 7, wobei die Datensymbole unter Verwendung von Raum-Zeit-Übertragungsdiversifizierung STTD kodiert sind.

**9.** Eine Einrichtung (100) nach Anspruch 7, **gekennzeichnet durch** ein Mittel zum Schätzen von Interferenz von den Pilotsymbolen.

**10.** Eine Einrichtung (100) nach Anspruch 9, **gekennzeichnet durch** ein Filter zum Filtern der geschätzten Interferenz.

**11.** Eine Einrichtung (100) nach Anspruch 7, wobei die Einrichtung angepasst ist, ein Signal-Interferenz-Verhältnis SIR eines Signals zu schätzen, das von einer Basisstation zu einer entfernt befindlichen Mobileinheit übertragen wird.

**12.** Eine Einrichtung (100) nach Anspruch 7, wobei die Einrichtung angepasst ist, ein Signal-Interferenz-Verhältnis SIR eines Signals zu schätzen, das von einer Mobileinheit zu einer entfernt befindlichen Basisstation übertragen wird.

**13.** Ein computerlesbares Medium mit einer Vielzahl von Computer-ausführbaren Instruktionen, angepasst, das Verfahren nach beliebigen von Ansprüchen 1 bis 6 auszuführen.

**Revendications**

**1.** Procédé d'estimation d'un rapport signal/parasites SIR d'un signal transmis d'une première unité à une seconde unité située à distance dans un système de communication sans fil à Accès Multiple par Répartition de Codes à Large Bande WCDMA, ledit signal étant transmis par l'intermédiaire d'une interface d'air et comportant des symboles de pilote et de données, **caractérisé par** les étapes qui consistent :

à vérifier (5.40) un ordre transmis de Commande de Puissance de Transmission TPC, dans lequel ladite vérification comprend
la pondération desdits symboles de pilote et de données, et
le fait de déterminer si ledit ordre TPC a été correctement reçu, et
à donner une estimation du rapport SIR (5.50) suivant le résultat de ladite vérification TPC (5.40).

**2.** Procédé selon la revendication 1, **caractérisé par** le codage desdits symboles de données en utilisant une diversité de transmission dans l'espace-temps STTD.

**3.** Procédé selon la revendication 1, **caractérisé par** l'estimation de parasites à partir desdits symboles de pilote (5.20).

**4.** Procédé selon la revendication 3, **caractérisé par** le filtrage des parasites estimés.

**5.** Procédé selon la revendication 1, dans lequel la première unité est une station de base et la seconde unité est une unité mobile.

**6.** Procédé selon la revendication 1, dans lequel la première unité est une unité mobile et la seconde unité est une station de base.

**7.** Dispositif (100) pour estimer un rapport signal/parasites SIR d'un signal transmis depuis une première unité à un système de communication sans fil à Accès Multiple par Répartition de Codes à Large Bande WCDMA, ledit signal étant transmis par l'intermédiaire d'une interface d'air et comportant des symboles de pilote et de données, **caractérisé en ce que** ledit dispositif comporte :

un moyen pour une vérification de Commande de Puissance de Transmission TPC (40) ayant un signal de sortie, dans lequel ledit moyen de vérification TPC est agencé de façon à pondérer lesdits symboles de pilote et de données et comporte un moyen destiné à déterminer si un ordre TPC a été correctement reçu, et
un moyen pour une estimation du rapport SIR (50) en utilisant ledit signal de sortie en tant que signal d'entrée.

**8.** Dispositif (100) selon la revendication 7, dans lequel lesdits symboles de données sont codés en utilisant une Diversité de Transmission en Espace-Temps STTD.

**9.** Dispositif (100) selon la revendication 7, **caractérisé par** un moyen destiné à estimer des parasites à partir desdits symboles de pilote.

**10.** Dispositif (100) selon la revendication 9, **caractérisé par** un filtre destiné à filtrer lesdits parasites estimés.

**11.** Dispositif (100) selon la revendication 7, dans lequel le dispositif est conçu pour estimer un rapport signal/parasite SIR d'un signal transmis depuis une station de base à une unité mobile située à distance.

**12.** Dispositif (100) selon la revendication 7, dans lequel le dispositif est conçu pour estimer un rapport signal/parasite SIR d'un signal transmis depuis une unité mobile à une station de base située à distance.

**13.** Support lisible par ordinateur ayant plusieurs instructions exécutables par ordinateur conçues pour exécuter le procédé selon l'une quelconque des revendications 1 à 6.

**Fig. 1 A**

**Fig. 1 B**

Fig. 2

accurate SIR estimation.

If there is not enough time for UTRAN to respond to the TPC, the action can be delayed until the next slot.

EP 1 408 635 B1

Slot boundary

$I_3^{(n-1)}$ | $I_1^{(n)}$ | $I_2^{(n)}$ | $I_3^{(n)}$ | $I_1^{(n+1)}$

← 512 chips →

The power changes

TPC command $n$ must be ready

**Fig. 3**

Slot boundary

Control channel | $I_1^{(n)}$ | $I_1^{(n+1)}$

Data channel | $I_2^{(n)}$ | $I_2^{(n+1)}$

**Fig. 4**

```
┌─────────────────────┐
│     calculate       │ ⌐ 5.10
│     averaged        │
│   received power    │
└─────────────────────┘
           │
           ▼
┌─────────────────────┐
│     estimate        │ ⌐ 5.20
│   interference      │
└─────────────────────┘
           │
           ▼
┌─────────────────────┐
│   estimate power    │ ⌐ 5.30
└─────────────────────┘
           │
           ▼
┌─────────────────────┐
│     verify TPC      │ ⌐ 5.40
└─────────────────────┘
           │
           ▼
┌─────────────────────┐
│   estimate SIR      │ ⌐ 5.50
│   depending on      │
│  TPC verification   │
└─────────────────────┘
```

Fig. 5

**Fig. 6**